# EUROPÄISCHE PATENTANMELDUNG

(11) **EP 3 508 665 A1**
(43) Veröffentlichungstag der Anmeldung: **10.07.2019**
(21) Anmeldenummer: 19150453.9
(22) Anmeldetag: 07.01.2019
(51) Int. Cl.: E04F 13/08, E04F 13/12, E04B 1/41, E04G 23/02, F16B 13/14

(54) **FASSADENHALTER, BEFESTIGUNGSANORDNUNG MIT EINEM SOLCHEN FASSADENHALTER UND VERFAHREN ZUR BEFESTIGUNG EINER FASSADENPLATTE**

(30) Priorität: 09.01.2018 DE 102018100312
(71) Anmelder: fischerwerke GmbH & Co. KG, 72178 Waldachtal (DE)
(72) Erfinder: Mauz, Joachim, 74722 Buchen (DE); Blum, Emil, 72178 Waldachtal (DE)
(74) Vertreter: Suchy, Ulrich Johannes

(57) **Zusammenfassung**

Die Erfindung betrifft einen Fassadenhalter (1) zu einer Sanierung einer vorgehängten Fassade. Die Erfindung schlägt vor, den Fassadenhalter (1) mit einer Gewindestange als Ankerstange (2) und einer auf der Ankerstange (2) verschiebbaren Hülse (3) auszubilden, die Durchtrittsöffnungen (8) und einen die Durchtrittsöffnungen (8) überdeckenden Gewebeschlauch (9) aufweist. Ein in die Hülse (3) eingefüllter Mörtel tritt durch die Durchtrittsöffnungen (8) aus und wölbt den Gewebeschlauch (9) zu einem umlaufenden Wulst nach außen, so dass eine Fassadenplatte zwischen einem zweiten Radialflansch (5) der Hülse (3) und dem von dem Mörtel gebildeten Wulst frei von mechanischen Spannungen auf der Hülse (3) gehalten ist.

## Beschreibung

Die Erfindung betrifft einen Fassadenhalter sowie eine Befestigungsanordnung und ein Verfahren zur Befestigung einer Fassadenplatte in einem Abstand von einer Gebäudeaußenwand oder allgemein an einer Mauer mit den Merkmalen der Oberbegriffe der Ansprüche 1, 11 und 12. "Gebäudeaußenwand" soll verallgemeinernd im Sinne einer Mauer oder dgl. aufgefasst werden.

Die Erfindung ist insbesondere zur Sanierung sogenannter vorgehängter Fassaden mit Fassadenplatten, insbesondere mit Fassadenplatten aus Naturstein oder Beton vorgesehen. "Vorgehängt" bedeutet, dass die Fassadenplatten mit Abstand von der Gebäudeaußenwand oder allgemein von der Mauer oder dergleichen an der Gebäudeaußenwand, Mauer oder dergleichen befestigt sind. Es kommt vor, dass solche vorgehängten Fassadenplatten an Stellen, an denen sie befestigt sind, ausbrechen, was eine neue oder zusätzliche Befestigung erfordern kann.

Ein Fassadenhalter zur Sanierung solcher vorgehängter Fassaden ist bekannt aus der Offenlegungsschrift DE 199 12 151 A1. Der bekannte Fassadenhalter weist eine 2-teilige Ankerstange, deren eines Teil auch als Maueranker bezeichnet werden kann, und eine Hülse mit einem Radialflansch an einem Ende auf. Der Maueranker weist an einem Ende ein Außengewinde und an einem anderen Ende ein Innengewinde auf, in das eine Schraube einschraubbar ist, die ein zweites Teil der Ankerstange des bekannten Fassadenhalters bildet. Der Maueranker wird durch ein Durchgangsloch in einer Fassadenplatte, die mit Abstand vor einer Gebäudeaußenwand angeordnet ist, beispielsweise mit Mörtel in einem Sackloch in der Gebäudeaußenwand befestigt. Das Sackloch wird vor der Befestigung des Mauerankers durch das Durchgangsloch in der Fassadenplatte in die Gebäudeaußenwand gebohrt. Die Hülse wird in das Durchgangsloch der Fassadenplatte eingesetzt, so dass ihr Radialflansch auf einer der Gebäudeaußenwand abgewandten Außenseite der Fassadenplatte aufliegt, und die Schraube wird durch die Hülse hindurch in das Innengewinde des Mauerankers geschraubt. Die Hülse umschließt die Schraube unter Belassung eines Ringspalts, so dass ein Zwischenraum mit kreisringförmigem Querschnitt zwischen der Hülse und der Schraube besteht, die das zweite Teil der Ankerstange des bekannten Fassadenhalters bildet. Durch einen Injektionskanal in der Schraube wird Mörtel in den Zwischenraum injiziert, der auf einer der Gebäudeaußenwand zugewandten Innenseite der Fassadenplatte aus der Hülse austritt und einen Mörtelpfropf auf der Innenseite der Fassadenplatte bildet, so dass die Fassadenplatte zwischen dem Mörtelpfropf auf ihrer Innenseite und dem Radialflansch der Hülse auf ihrer Außenseite axialfest auf der Ankerstange gehalten ist. Durch Festziehen der Schraube können ungewünschte mechanische Spannungen in der Fassadenplatte entstehen.

Zur Vermeidung dieser ungewünschten mechanischen Spannungen wird erfindungsgemäß ein Fassadenhalter mit den Merkmalen des Anspruchs 1, eine Befestigungsanordnung mit den Merkmalen des Anspruchs 11 und/oder ein Verfahren mit den Merkmalen des Anspruchs 12 vorgeschlagen.

Der erfindungsgemäße Fassadenhalter ist zu einer Befestigung einer Fassadenplatte an einer Gebäudeaußenwand oder allgemein an einer Mauer in einem Abstand von der Gebäudeaußenwand vorgesehen. Er ist insbesondere zu einer Sanierung vorgesehen, was bedeutet, dass die Fassadenplatte in Abstand vor der Gebäudeaußenwand angeordnet ist und der Fassadenhalter durch ein Durchgangsloch in der Fassadenplatte an der Gebäudeaußenwand und an der Fassadenplatte befestigt wird, ohne dass die bereits vorhandene Fassadenplatte demontiert werden muss.

Der erfindungsgemäße Fassadenhalter weist eine Ankerstange und eine auf der Ankerstange axial verschiebbare Hülse auf, die die Ankerstange mit einem Zwischenraum umschließt, wenn sie auf der Ankerstange angeordnet ist. Zur Befestigung an einer Gebäudeaußenwand wird die Ankerstange mit einem Spreizdübel oder mit einer aushärtenden Masse, beispielsweise einem Mörtel, in einem Bohrloch in der Gebäudeaußenwand befestigt. Das Bohrloch wird durch ein Durchgangsloch in der Fassadenplatte hindurch in die Gebäudeaußenwand gebohrt. Andere Befestigungen der Ankerstange in oder an der Gebäudeaußenwand sind nicht ausgeschlossen. Die Ankerstange steht von der Gebäudeaußenwand in Richtung der Fassadenplatte ab, sie reicht vorzugsweise bis in das Durchgangsloch in der Fassadenplatte und endet vorzugsweise in der Fassadenplatte, das heißt, die Ankerstange reicht vorzugsweise nicht bis zu einer der Gebäudeaußenwand abgewandten Außenseite der Fassadenplatte.

Die Hülse des erfindungsgemäßen Fassadenhalters weist mindestens ein nach innen in Richtung der Ankerstange abstehendes Hintergriffelement für einen axialen Halt der Hülse auf der Ankerstange mittels einer aushärtenden Masse in zumindest einer Achsrichtung auf. Die aushärtende Masse ist beispielsweise ein Mörtel, auch ein Kunstharzmörtel, ein Kunstharz oder Klebstoff. Die Masse wird als aushärtende Masse in fließfähigen Zustand in den Zwischenraum zwischen der Hülse und der Ankerstange eingebracht und verbindet sich beim Aushärten mit der Ankerstange. Beim Aushärten kann sich die Masse auch mit der Hülse verbinden. Jedenfalls hält die Masse die Hülse durch Formschluss mit dem nach innen abstehenden Hintergriffelement der Hülse zumindest in einer Achsrichtung axialfest an der Ankerstange. Die aushärtende Masse kann nach dem Aushärten auch als ausgehärtete Masse bezeichnet werden.

Ein Vorteil der Erfindung ist, dass der Fassadenhalter keine Kraft in axialer Richtung seiner Ankerstange auf die Fassadenplatte ausübt, weil die Hülse bis zum Aushärten der aushärtenden Masse auf der Ankerstange axial verschieblich ist. Dadurch vermeidet die Erfindung mechanische Spannungen in der Fassadenplatte durch in axialer Richtung der Ankerstange auf die Fassadenplatte ausgeübte Kräfte des Fassadenhalters. Die Verbindung zwischen Hülse und Ankerstange erfolgt ausschließlich durch die aushärtende Masse und ohne eine ein zusätzliches Verschrauben oder Verspannen, also ohne dass ungewünschte mechanische Spannungen durch Zwängungen entstehen können, wie dies beispielsweise durch das Anziehen einer Mutter oder eine Schraube zum Sichern der Hülse an der Gewindestange der Fall wäre.

Insbesondere ist die Hülse derart gestaltet, dass sie ein Spiel zur Ankerstange aufweist, derart, dass die Hülse nicht zwingend koaxial zur Ankerstange in ein Durchgangsloch in einer Fassadenplatte eingebracht werden muss, sondern auch exzentrisch. Eine exzentrische Anordnung von Hülse und Ankerstange ist möglich, da erfindungsgemäß der Bereich zwischen Hülse und Ankerstange mit der aushärtenden Masse ausgefüllt und damit die Verbindung zwischen Hülse und Ankerstange hergestellt wird.

Eine Ausgestaltung der Erfindung sieht ein Formschlusselement der Ankerstange für die aushärtende Masse zum formschlüssigen Verbinden in axialer Richtung vor. Ein solches Formschlusselement kann beispielsweise ein Rändel oder eine umlaufende Rillung sein. Vorzugsweise weist die Ankerstange ein Gewinde als Formschlusselement für die aushärtende Masse auf. Ohne die aushärtende Masse ist die Hülse trotz des Gewindes oder allgemein des Formschlusselements auf der Ankerstange axial verschiebbar.

Vorzugsweise ist die axial auf der Ankerstange verschiebliche Hülse radial auf der Ankerstange fest. Hierzu korrespondiert der Querschnitt einer Durchgangsöffnung der Hülse, durch die die Ankerstange axial durchführbar ist, mit dem Querschnitt der Ankerstange.

An einem Stirnende der Hülse sieht eine Ausgestaltung der Erfindung eine Einfüllöffnung für die aushärtende Masse vor, die mit einem Innenraum der Hülse und damit mit dem Zwischenraum zwischen der Hülse und der Ankerstange, wenn die Hülse auf der Ankerstange angeordnet ist, kommuniziert. Die Einfüllöffnung ist insbesondere so angeordnet und ausgebildet, dass sie zum Einfüllen der aushärtenden Masse in die Hülse von der Außenseite der Fassadenplatte zugänglich ist, wenn sich die Hülse - ggf. auch versenkt - in dem Durchgangsloch in der Fassadenplatte befindet.

Eine Ausgestaltung der Erfindung sieht eine an der Hülse angeordnete Durchtrittsöffnung für die aushärtende Masse zum Austritt aus der Hülse vor, vorzugsweise in einem Umfang der Hülse. Die Durchtrittsöffnung geht insbesondere von einer der Ankerstange zugewandten Innenseite der Hülse zu einem Außenumfang der Hülse durch, sie durchdringt insbesondere eine Umfangswand der Hülse radial. Wird die aushärtende Masse in fließfähigem Zustand in den Zwischenraum zwischen der Hülse und der Ankerstange eingebracht, gelangt sie zum einen in Kontakt mit der Ankerstange, so dass sich die Masse beim Aushärten mit der Ankerstange fest verbindet, und tritt zum anderen durch die Durchtrittsöffnung nach außen aus der Hülse aus, so dass sie eine stoff- und/oder formschlüssige Verbindung mit der Fassadenplatte eingehen kann. Vorzugsweise befindet sich die Durchtrittsöffnung in einer axialen Hälfte der Hülse, das heißt zwischen einem Stirnende und einer Längsmitte der Hülse.

Eine Ausgestaltung der Erfindung sieht ein Trennelement beispielsweise nach Art eines Schotts in der Hülse vor, das in einer Längsrichtung der Hülse und der Ankerstange verläuft und das bei auf der Ankerstange angeordneter Hülse den die Ankerstange in der Hülse umgebenden Zwischenraum in einer Umfangsrichtung unterteilt. Ein vollkommen dichter Abschluss des Trennelements zur Ankerstange ist nicht notwendig. Das Trennelement kann achsparallel oder auch zick-zack-, wellen- oder wendelförmig verlaufen, es weist jedenfalls eine Erstreckung in der Längsrichtung der Hülse und der Ankerstange auf. Das Trennelement sorgt dafür, dass sich die aushärtende Masse beim Einfüllen in den Zwischenraum zwischen der Hülse und der Ankerstange in Längsrichtung verteilt.

Eine Weiterbildung der Erfindung sieht vor, dass sich das Trennelement von dem die Einfüllöffnung aufweisenden Stirnende der Hülse in Richtung der Durchtrittsöffnung erstreckt, wobei das Trennelement vorzugsweise bis zur Durchtrittsöffnung reicht, allerdings auch schon vor der Durchtrittsöffnung enden kann. In Längsrichtung kann das Trennelement bis in die Durchtrittsöffnung hinein reichen, wobei es vorzugsweise in Umfangsrichtung versetzt zur Durchtrittsöffnung ist, so dass es die Durchtrittsöffnung radial gesehen nicht verdeckt. Das Trennelement kann sich auch über die Durchtrittsöffnung hinweg und/oder bis zu einem der Einfüllöffnung gegenüberliegenden Stirnende der Hülse erstrecken. Diese Ausgestaltung der Erfindung ist dafür vorgesehen, dass die durch die Einfüllöffnung in den Zwischenraum zwischen der Hülse und der Ankerstange eingefüllte aushärtende Masse bis zur Durchtrittsöffnung strömt, wo sie nach außen austritt. Vorzugsweise wird die aushärtende Masse um ein Ende des Trennelements herum umgelenkt, so dass sie in dem Zwischenraum zwischen der Hülse und der Ankerstange wieder zurückfließt, um eine vollständige Verfüllung des Zwischenraums, von dem die Einfüllöffnung aufweisenden Stirnende der Hülse aus, kontrollieren zu können.

Eine Ausgestaltung der Erfindung sieht Abflachungen an gegenüberliegenden Außenseiten der Hülse vor. Die Abflachungen ermöglichen eine Beweglichkeit der Fassadenplatte in einer radialen Richtung zur Hülse und zur Ankerstange, wenn die Hülse in ein zylindrisches Durchgangsloch in der Fassadenplatte eingebracht ist. Das ermöglicht eine von mechanischen Spannungen freie Befestigung der Fassadenplatte mit mehreren Fassadenhaltern und einen Ausgleich von temperaturbedingten Längenänderungen der Fassadenplatte

Eine Ausgestaltung der Erfindung sieht ein von der Hülse nach außen abstehendes Durchmesserausgleichselement an einer Umfangsstelle der Hülse vor, dass eine Anpassung der Hülse an einen Durchmesser des Durchgangslochs in der Fassadenplatte ermöglicht.

Eine Ausgestaltung der Erfindung sieht ein von der Hülse radial abstehendes Halteelement vor, beispielsweise einen nach außen stehenden Radialflansch, und/oder einen radial nach innen stehenden Radialflansch. Das nach außen abstehende Halteelement übergreift die Fassadenplatte an ihrer Außenseite. Der nach innen stehende Radialflansch bildet das Hintergriffelement, das die Hülse durch Formschluss in axialer Richtung mit der aushärtenden Masse verbindet. Je nach Anordnung des nach innen stehenden Radialflansches an einem oder an beiden Stirnenden und/oder zwischen den Stirnenden der Hülse wirkt der Formschluss in einer oder in beiden axialen Richtungen.

Gegenstand der erfindungsgemäßen Befestigungsanordnung nach Anspruch 11 ist eine mit dem vorstehend erläuterten Fassadenhalter in einem Abstand von einer Gebäudeaußenwand oder allgemein einer Mauer oder dergleichen an der Gebäudeaußenwand, Mauer oder dergleichen befestigte Fassadenplatte, die ein Durchgangsloch für die Befestigung mit dem Fassadenhalter aufweist. Zur sprachlichen Vereinfachung wird nachfolgend nur noch von einer Gebäudeaußenwand die Rede sein, womit allerdings auch eine Mauer oder ein anderer Befestigungsgrund für die Ankerstange des Fassadenhalters gemeint ist. Die Ankerstange des Fassadenhalters ist so an der Gebäudeaußenwand befestigt, dass sie in Richtung der Fassadenplatte absteht und in das Durchgangsloch der Fassadenplatte reicht. Die Ankerstange kann auf der der Gebäudeaußenwand abgewandten Außenseite der Fassadenplatte aus der Fassadenplatte vorstehen, vorzugsweise steht die Ankerstange jedoch nicht auf der Außenseite aus der Fassadenplatte vor, sondern endet allenfalls bündig mit der Außenseite der Fassadenplatte oder vorzugsweise versenkt innerhalb des Durchgangslochs der Fassadenplatte, also mit Unterstand.

Auf der Ankerstange und in dem Durchgangsloch der Fassadenplatte ist die Hülse des Fassadenhalters angeordnet, wobei sich in dem Zwischenraum zwischen der Hülse und der Ankerstange die aushärtende Masse befindet, die in fließfähigem Zustand in den Zwischenraum eingebracht worden ist. Die aushärtende Masse verbindet, wenn sie ausgehärtet ist, die Ankerstange mit der Hülse, wobei ein Formschluss mit dem Hintergriffelement, das in der Hülse nach innen in den Zwischenraum zwischen der Ankerstange und der Hülse und in Richtung der Ankerstange absteht, und der aushärtenden Masse besteht, der die Hülse axial in zumindest einer Achsrichtung auf der Ankerstange hält. Vorzugsweise wirkt der Formschluss in beiden Achsrichtungen, also zur Gebäudeaußenwand hin und von dieser weg, wozu sich die aushärtende Masse axial auf zwei Seiten des Hintergriffelements befinden kann und/oder sich Hintergriffelemente axial auf zwei Seiten der aushärtenden Masse befinden können.

Weil die Hülse vor dem Aushärten der aushärtenden Masse axial auf der Ankerstange verschieblich ist, übt der Fassadenhalter bei der Montage keine zwängende Kraft in axialer Richtung seiner Ankerstange auf die Fassadenplatte aus und erzeugt deswegen keine mechanischen Spannungen in der Fassadenplatte durch eine in axialer Richtung der Ankerstange auf die Fassadenplatte ausgeübte Kraft, wie dies beim Verspannen mit einer Schraube oder einer Mutter der Fall sein kann. Das Hintergriffelement kann wie oben erläutert ein lochscheibenförmiger, in der Hülse nach innen ragender Radialflansch sein, der sich zwischen den beiden Stirnenden der Hülse befindet. Die Hülse kann auch mehrere solche Radialflansche an verschiedenen Stellen zwischen und/oder an ihren beiden Stiernenden als Hintergriffelemente aufweisen. Es ist auch ein oder sind mehrere andere Hintergriffelemente wie beispielsweise in der Hülse nach innen abstehende Noppen, Zapfen, oder in Umfangsrichtung verlaufende Stege möglich.

Die Ankerstange kann ein Gewinde, einen Rändel oder dergleichen als Formschlusselement für einen (verbesserten) axialen Halt der aushärtenden Masse aufweisen. Ein solches Formschlusselement oder Formschlusselemente befinden sich vorzugsweise innerhalb der Hülse und können sich zusätzlich auch auf einer der Gebäudeaußenwand zugewandten Seite der Hülse an der Ankerstange befinden.

Eine Weiterbildung der Erfindung sieht vor, dass die Fassadenplatte eine beispielsweise zylindrische oder konische Senkung an einer Mündung des Durchgangslochs der Fassadenplatte auf der der Gebäudeaußenwand abgewandten Außenseite der Fassadenplatte aufweist. Die Senkung ist insbesondere aus optischen Gründen vorgesehen. Sie ermöglicht eine, von der Außenseite der Fassadenplatte gesehen, nicht sichtbare, versenkte Befestigung des Fassadenhalters an der Fassadenplatte in der Senkung. Nach Fertigstellung der Befestigung kann die Senkung mit der aushärtenden Masse ausgefüllt, verspachtelt und/oder beispielsweise mit einem Stopfen oder Deckel verschlossen werden.

Eine zusätzliche oder alternative Möglichkeit ist, dass die Hülse des Fassadenhalters nicht auf der Außenseite der Fassadenplatte aus dem Durchgangsloch vorsteht, sondern bündig mit der Außenseite der Fassadenplatte oder vorzugsweise versenkt in dem Durchgangsloch in der Fassadenplatte endet.

Um die Fassadenplatte gegen ein Entfernen von der Gebäudeaußenwand zu halten, sieht eine Ausgestaltung der Erfindung vor, dass die Hülse ein radial nach außen abstehendes Halteelement aufweist, das die Fassadenplatte auf der der Gebäudeaußenwand abgewandten Außenseite übergreift. Das Halteelement kann die Fassadenplatte auch an einem Grund der Senkung an der Mündung des Durchgangslochs auf der Außenseite der Fassadenplatte übergreifen, wenn eine solche Senkung vorhanden ist. Dadurch ist ein bündiger Abschluss des Halteelements mit der Außenseite der Fassadenplatte oder eine in der Senkung versenkte Anordnung des Halteelements möglich, die eine Abdeckung des Fassadenhalters mit beispielsweise einer aushärtenden Masse, einer Kappe oder einem Deckel ermöglicht. Das Halteelement kann eine radial nach außen von der Hülse abstehende Noppe, Nase, Rippe oder dergleichen sein, wobei insbesondere mehrere Halteelemente ausgebildet sein können. Eine Ausgestaltung sieht einen von der Hülse nach außen abstehenden Radialflansch als Halteelement vor. Vorzugsweise ist das Halteelement an einem der Gebäudeaußenwand abgewandten Stirnende der Hülse angeordnet.

Das erfindungsgemäße Verfahren mit den Merkmalen des Anspruchs 12 sieht eine Befestigung einer Fassadenplatte mit Abstand von einer Gebäudeaußenwand an der Gebäudeaußenwand mit einem Fassadenhalter vor, insbesondere mit dem oben erläuterten Fassadenhalter. Unter einer "Gebäudeaußenwand" ist verallgemeinernd auch eine Mauer oder ein sonstiger Befestigungsgrund für den Fassadenhalter und die Fassadenplatte zu verstehen. Zur Befestigung der Fassadenplatte wird die Ankerstange des Fassadenhalters von der Gebäudeaußenwand in Richtung der Fassadenplatte abstehend an der Gebäudeaußenwand befestigt, und es wird die Hülse auf der Ankerstange und in dem Durchgangsloch der Fassadenplatte angeordnet. Die Hülse kann auf die Ankerstange und in das Durchgangsloch der Fassadenplatte insbesondere aufgesteckt oder aufgeschoben werden, wenn die Ankerstange an der Gebäudeaußenwand befestigt ist, oder die Hülse wird vor der Befestigung der Ankerstange an der Gebäudeaußenwand auf der Ankerstange angeordnet und mit der Ankerstange in das Durchgangsloch in der Fassadenplatte eingebracht. Zu einer Sanierung einer vorgehängten Fassade, das heißt zu einer Befestigung einer Fassadenplatte, die mit Abstand vor der Gebäudeaußenwand angeordnet ist, wird die Ankerstange des Fassadenhalters durch das Durchgangsloch in der Fassadenplatte hindurch an der Gebäudeaußenwand befestigt. In den Zwischenraum zwischen der Hülse und der Ankerstange wird eine aushärtende Masse in fließfähigem Zustand eingebracht, die die Hülse mit der Ankerstange axialfest verbindet, wenn die Masse aushärtet. Es erfolgt keine zusätzliche Verschraubung oder dergleichen zur Befestigung. Grundsätzlich kann nach dem Aushärten der Masse zur Sicherung eine Mutter auf die Ankerstange aufgeschraubt oder eine Schraube in ein Innengewinde der Ankerstange eingeschraubt werden. Dadurch übt der Fassadenhalter aber keine Kraft in axialer Richtung seiner Ankerstange auf die Fassadenplatte aus, da die Lage der Hülse bereits durch die ausgehärtete Masse gesichert ist, wodurch mechanische Spannungen in der Fassadenplatte durch eine Kraft in axialer Richtung der Ankerstange vermieden werden. Vorzugsweise wird die Hülse so tief in das Durchgangsloch der Fassadenplatte eingebracht, dass sie nicht auf der der Gebäudeaußenwand abgewandten Außenseite der Fassadenplatte übersteht, sondern dass sie bündig mit der Außenseite der Fassadenplatte abschließt oder vorzugsweise versenkt im Durchgangsloch der Fassadenplatte endet, beispielsweise an einem Grund einer Senkung an der Mündung des Durchgangslochs auf der Außenseite der Fassadenplatte.

Eine bevorzugte Ausgestaltung des erfindungsgemäßen Verfahrens sieht die Verwendung eines Fassadenhalters vor, dessen Hülse eine Durchtrittsöffnung für die aushärtende Masse aufweist, insbesondere in ihrem Umfang. Die Hülse wird so weit beziehungsweise tief in das Durchgangsloch der Fassadenplatte eingebracht, dass die Durchtrittsöffnung sich insbesondere vollständig außerhalb der Fassadenplatte auf der der Gebäudeaußenwand zugewandten Innenseite der Fassadenplatte oder teilweise in dem Durchgangsloch in der Fassadenplatte und teilweise außerhalb der Fassadenplatte auf der der Gebäudeaußenwand zugewandten Innenseite der Fassadenplatte befindet. Beim Einbringen der aushärtenden Masse in fließfähigem Zustand in den Zwischenraum zwischen der Hülse und der Ankerstange tritt die aushärtende Masse in Kontakt sowohl mit der Ankerstange als auch mit der Hülse und es tritt ein Teil der aushärtenden Masse durch die Durchtrittsöffnung der Hülse an einem Außenumfang der Hülse nach außen aus und formt beispielsweise eine Art Pfropf oder eine Art umlaufenden Wulst. Nach dem Aushärten bildet die aus der Hülse nach außen ausgetretene, aushärtende Masse ein Widerlager für die Fassadenplatte, das die Fassadenplatte in ihrem Abstand von der Gebäudeaußenwand hält. Die durch die Durchtrittsöffnung der Hülse nach außen ausgetretene Masse kann sich auch mit der Fassadenplatte verbinden. Die Fassadenplatte wird nicht wie beispielsweise bei einer Schraubverbindung in axialer Richtung der Ankerstange des Fassadenhalters eingespannt, so dass keine mechanischen Spannungen erzeugt werden.

Die vorstehend in der Beschreibung genannten Merkmale und Merkmalskombinationen, Ausführungen und Ausgestaltungen der Erfindung sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es ist auch eine Kombination von einzelnen oder mehreren Merkmalen von Ansprüchen unterschiedlicher Kategorien möglich. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiterer Ausführungsbeispiele aufweisen, sind möglich.

Die Erfindung wird nachfolgend anhand eines in der Zeichnung dargestellten Ausführungsbeispiels näher erläutert. Es zeigen:
- Figur 1: einen Fassadenhalter gemäß der Erfindung in einer Explosionsdarstellung, wobei eine Hülse des Fassadenhalters in einem Achsschnitt gezeichnet ist;
- Figur 2: eine Stirnansicht der Hülse des Fassadenhalters mit Blickrichtung gemäß Pfeil II in Figur 1; und
- Figur 3: eine erfindungsgemäße Befestigungsanordnung mit dem Fassadenhalter aus Figur 1 in einer Achsschnittdarstellung.

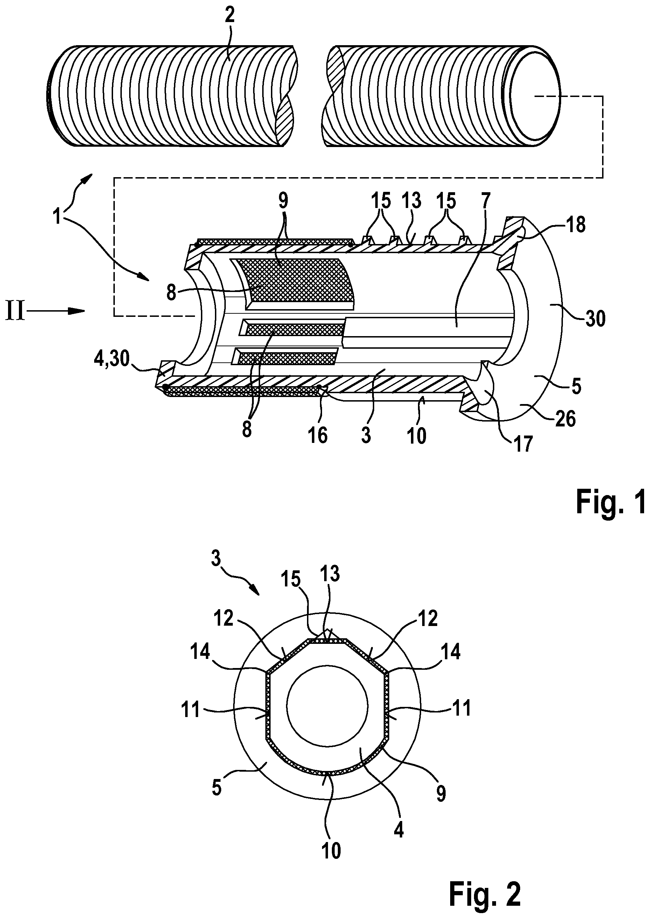

Der in Figur 1 dargestellte, erfindungsgemäße Fassadenhalter 1 weist eine Gewindestange als Ankerstange 2 und eine Hülse 3 auf, die im Ausführungsbeispiel aus Kunststoff besteht, was allerdings nicht zwingend ist.

Die Hülse 3 weist an einem ersten Stirnende einen ersten, nach innen stehenden, lochscheibenförmigen Radialflansch 4 und an einem gegenüberliegenden zweiten Stirnende einen sowohl nach innen als auch nach außen stehenden, ebenfalls lochscheibenförmigen zweiten Radialflansch 5 auf. Die Innendurchmesser der beiden Radialflansche 4, 5 sind so groß oder nur wenig kleiner als ein Gewindeaußendurchmesser der Ankerstange 2, so dass die Hülse 3 axial auf der Ankerstange 2 verschiebbar ist, vorzugsweise mit Spiel oder mit einer niedrigen Klemmkraft gegen unbeabsichtigtes Verschieben der Hülse 3 auf der Ankerstange 2. Die Hülse 3 weist kein Gewinde oder ähnliches auf, es besteht kein Gewindeeingriff der Hülse 3 mit dem Gewinde der Ankerstange 2.

Wenn die Hülse 3 auf der Ankerstange 2 angeordnet ist, besteht ein die Ankerstange 2 in der Hülse 3 umschließender Zwischenraum 6 zwischen der Hülse 3 und der Ankerstange 2.

Die Hülse 3 weist innen zwei achsparallel verlaufende Stege als Trennelemente 7 an einander gegenüberliegenden Umfangsstellen der Hülse 3 auf, die an dem zweiten Radialflansch 5 beginnen und im Ausführungsbeispiel bis etwas über eine Längsmitte der Hülse 3 reichen. Wenn die Hülse 3 auf der Ankerstange 2 angeordnet ist, liegen die die Trennelemente 7 bildenden Stege am Gewinde der Ankerstange 2 an und teilen den Zwischenraum 6 zwischen der Hülse 3 und der Ankerstange 2 in zwei halbzylinderschalenförmige Hohlräume. Die Trennelemente 7 können kürzer oder länger als im Ausführungsbeispiel sein. Auch ist ein achsparalleler Verlauf nicht zwingend, sondern es sind auch beispielsweise wellen-, zick-zack- oder wendelförmige Trennelemente 7 möglich. Notwendig ist eine Komponente der Trennelemente 7 in achsparalleler Richtung und ein Durchlass im Zwischenraum 6 vom zweiten Radialflansch 5 bis zu den Enden der Trennelemente 7.

In einer axialen Hälfte der Hülse 3 weist die Hülse 3 mehrere rechteckige, über einen Umfang der Hülse 3 verteilte Durchtrittsöffnungen 8 in ihrem Umfang auf. "Axiale Hälfte" bedeutet auf einer Seite einer Radialebene in der Längsmitte der Hülse 3. Die Durchtrittsöffnungen 8 befinden sich in der axialen Hälfte der Hülse 3, die an dem Stirnende beginnt, an dem sich der nur nach innen stehende erste Radialflansch 4 befindet. Im Ausführungsbeispiel sind die Durchtrittsöffnungen 8 verschieden breit und ungleichmäßig über den Umfang der Hülse 3 verteilt angeordnet, was allerdings beides nicht zwingend ist. Auch müssen die Durchtrittsöffnungen 8 nicht rechteckig, sondern können beispielsweise auch rund, oval, schlitz- oder wellenförmig sein (nicht dargestellt). Notwendig ist, dass die Durchtrittsöffnungen 8 eine noch zu erläuternde aushärtende Masse durchtreten lassen.

In einem die Durchtrittsöffnungen 8 aufweisenden Bereich weist die Hülse 3 einen sie umschließenden und die Durchtrittsöffnungen 8 überdeckenden Gewebeschlauch 9 auf, dessen beide Stirnränder umlaufend, beispielsweise durch Kleben oder Schweißnähte, mit der Hülse 3 verbunden sind. Die Verbindungen des Gewebeschlauchs 9 mit der Hülse 3 befinden sich außerhalb der Durchtrittsöffnungen 8.

Außen weist die Hülse 3, wie in der Stirnansicht der Figur 2 zu sehen, einen zylindrischen Abschnitt 10 auf, an den sich in Umfangsrichtung zwei einander gegenüberliegende und zueinander parallele Parallelflächen 11 anschließen. Vervollständigt wird ein Außenumfang der Hülse 3 durch zwei Schrägflächen 12, die sich an die beiden Parallelflächen 11 anschließen, schräg aufeinander zu verlaufen und durch eine schmale, ebene Fläche 13 verbunden sind, die sich dem zylindrischen Abschnitt 10 gegenüber befindet. Kanten 14 zwischen den Parallelflächen 11 und den Schrägflächen 12 befinden sich innerhalb eines gedachten, die Hülse 3 umschließenden und zur Hülse 3 koaxialen Zylinders mit dem Radius des zylindrischen Abschnitts 10 der Hülse 3. Die Parallelflächen 11 können allgemein auch als Abflachungen an gegenüberliegenden Seiten des Außenumfangs der Hülse 3 aufgefasst werden.

Auf der schmalen, ebenen Fläche 13 gegenüber dem zylindrischen Abschnitt 10 weist die Hülse 3 mehrere, axial hintereinander angeordnete und radial außen abstehende, dreiecksförmige Durchmesserausgleichselemente 15 auf. Form und Anordnung der Durchmesserausgleichselemente 15 sind nicht zwingend für die Erfindung. Die Durchmesserausgleichselemente 15 stehen nach außen über den gedachten, zur Hülse 3 koaxialen Zylinder mit dem Radius des zylindrischen Abschnitts 10 der Hülse 3 über.

Aufgrund einer Querschnittsstufe 16 außen an der Hülse 3 befindet sich der Gewebeschlauch 9 innerhalb des gedachten, zur Hülse 3 koaxialen Zylinders mit dem Radius des zylindrischen Abschnitts 10 der Hülse 3.

Der radial nach innen und nach außen stehende zweite Radialflansch 5 weist einander gegenüber zwei schräg von außen nach innen in den Zwischenraum 6 durchgehende Kanäle auf, von denen einer eine Einfüllöffnung 17 und ein anderer eine Kontrollöffnung 18 bildet. Wenn die Hülse 3 auf der Ankerstange 2 angeordnet ist, führen die beiden Kanäle von einer Außenseite des zweiten Radialflansches 5 beiderseits der Trennelemente 7 in den Zwischenraum 6 zwischen der Hülse 3 und der Ankerstange 2.

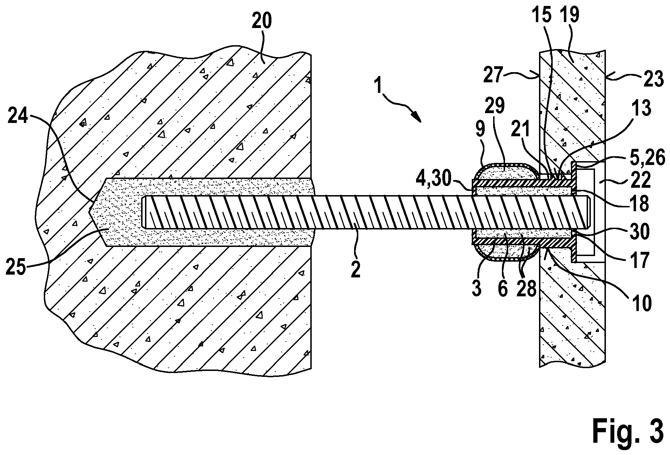

Der die Ankerstange 2 und die Hülse 3 aufweisende, erfindungsgemäße Fassadenhalter 1 ist zu einer Sanierung einer vorgehängten Fassade vorgesehen. Mit ihm lässt sich, wie in Figur 3 zu sehen, eine Fassadenplatte 19, die mit Abstand vor einer Gebäudeaußenwand 20 oder allgemein einer Mauer oder einem anderen Befestigungsgrund für die vorgehängte Fassade angeordnet ist, zusätzlich zu vorhandenen, nicht gezeichneten Haltern befestigen. Die Fassadenplatte 19 muss dazu nicht abgenommen werden. Die zusätzliche Befestigung kann notwendig werden, wenn sich eine Befestigung der Fassadenplatte 19, die beispielsweise aus Naturstein bestehen kann, durch beispielsweise Ausbrüche aus der Fassadenplatte 19 im Bereich der Befestigungen gelockert hat. Selbstverständlich kann der erfindungsgemäße Fassadenhalter 1 auch zu einer ursprünglichen Befestigung einer Fassadenplatte 19 benutzt werden.

Zur nachträglichen und zusätzlichen Befestigung der in Abstand von der Gebäudeaußenwand 20 angeordneten Fassadenplatte 19 wird ein zylindrisches Durchgangsloch 21 durch die Fassadenplatte 19 gebohrt und mit einer zylindrischen Senkung 22 auf einer der Gebäudeaußenwand 20 abgewandten Außenseite 23 der Fassadenplatte 19 versehen. Ein Durchmesser des Durchgangslochs 21 entspricht einem Außendurchmesser der Hülse 3 des Fassadenhalters 1. Ein Durchmesser der Senkung 22 ist mindestens so groß wie ein Außendurchmesser des zweiten Radialflansches 5 der Hülse 3 und die Senkung 22 ist mindestens so tief und vorzugsweise tiefer wie der zweite Radialflansch 5 dick ist.

Durch das Durchgangsloch 21 wird koaxial zum Durchgangsloch 21 ein als Sackloch 24 ausgeführtes Bohrloch in die Gebäudeaußenwand 20 gebohrt. In das Sackloch 24 wird durch das Durchgangsloch 21 in der Fassadenplatte 19 eine erste aushärtende Masse 25, beispielsweise ein Mörtel, ein Kunstharzmörtel, Kunstharz oder ein Klebstoff und anschließend die Ankerstange 2 des Fassadenhalters 1 eingebracht, so lange die erste aushärtende Masse 25 noch nicht ausgehärtet ist. Die Ankerstange 2 wird so in das Sackloch 24 in der Gebäudeaußenwand 20 eingebracht, dass sie von der Gebäudeaußenwand 20 in Richtung der Fassadenplatte 19 absteht und bis in das Durchgangsloch 21 in der Fassadenplatte 19 reicht, aber nicht auf der Außenseite 23 aus der Fassadenplatte 19 vorsteht. Vorzugsweise endet die Ankerstange 2 versenkt unter der Außenseite 23 der Fassadenplatte 19 entweder schon im Durchgangsloch 21 oder vorzugsweise in der Senkung 22. Beim Einbringen in das Sackloch 24 in der Gebäudeaußenwand 20 wird die Ankerstange 2 koaxial zum Durchgangsloch 21 in der Fassadenplatte 19 ausgerichtet.

Die Hülse 3 kann auf der Ankerstange 2 angeordnet sein, wenn die Ankerstange 2 in das Sackloch 24 in der Gebäudeaußenwand 20 eingebracht wird. Dadurch richtet die Hülse 3 die Ankerstange 2 koaxial im Durchgangsloch 21 in der Fassadenplatte 19 aus. Die Hülse 3 kann allerdings auch nachträglich in das Durchgangsloch 21 in der Fassadenplatte 19 eingebracht und zugleich auf der zuvor eingebrachten Ankerstange 2 angeordnet werden. Die von der Hülse 3 nach außen stehenden Durchmesserausgleichselemente 15 passen sich und damit die Hülse 3 durch elastische und/oder plastische Verformung an einen Durchmesser des Durchgangslochs 21 in der Fassadenplatte 19 an. Alternativ weist Hülse 3 ein Spiel zur Ankerstange 2 auf, derart, dass die Hülse 3 nicht zwingend koaxial zur Ankerstange 2 in das Durchgangsloch 21 eingebracht werden muss. Die Durchmesserausgleichselemente 15 bewirken eine Anpassung an eine Toleranz von Form und Durchmesser des Durchgangslochs 21.

Die Hülse 3 wird derart im Durchgangsloch 21 in der Fassadenplatte 19 angeordnet, dass ihr zweiter Radialflansch 5 an einem Grund der Senkung 22 anliegt. Ein von der Hülse 3 nach außen stehender Teil des zweiten Radialflansches 5 bildet ein von der Hülse 3 nach außen stehendes Halteelement 26, das die Fassadenplatte 19 an der Außenseite 23 beziehungsweise am Grund der Senkung 22 übergreift und die Fassadenplatte 19 dadurch gegen eine Entfernung von der Gebäudeaußenwand 20 hält.

Nach einem Aushärten der ersten aushärtenden Masse 25, die dann als ausgehärtete Masse bezeichnet werden kann, ist die Ankerstange 2 des erfindungsgemäßen Fassadenhalters 1 an beziehungsweise in der Gebäudeaußenwand 20 befestigt. Die Ankerstange 2 kann auch in anderer Weise an beziehungsweise in der Gebäudeaußenwand 20 befestigt werden, beispielsweise durch Eindrehen in einen Spreizanker nach der Art einer Stockschraube (nicht dargestellt).

Wenn die Hülse 3 so auf der Ankerstange 2 und im Durchgangsloch 21 in der Fassadenplatte 19 angeordnet ist, dass ihr zweiter Radialflansch 5 am Grund der Senkung 22 anliegt, steht die Hülse 3 auf einer der Gebäudeaußenwand 20 zugewandten Innenseite 27 in Richtung der Gebäudeaußenwand 20 aus der Fassadenplatte 19 vor. Die Durchtrittsöffnungen 8 der Hülse 3 befinden sich teilweise oder vollständig außerhalb der Fassadenplatte 19 auf deren Innenseite.

Durch die Einfüllöffnung 17 wird eine zweite aushärtende Masse 28 in den Zwischenraum 6 zwischen der Hülse 3 und der Ankerstange 2 gefüllt. Die Einfüllöffnung 17 im zweiten Radialflansch 5 der Hülse 3 ist von der Außenseite 23 der Fassadenplatte 19 zugänglich, wenn sich der zweite Radialflansch 5 am Grund der Senkung 22 befindet. Die in die Hülse 3 gefüllte zweite aushärtende Masse 28 kann die gleiche aushärtende Masse wie zur Befestigung der Ankerstange 2 an beziehungsweise in der Gebäudeaußenwand 20 sein; beispielsweise ist sie ein Mörtel, Kunstharzmörtel, ein Kunstharz oder ein Klebstoff. Sie wird in fließfähigem Zustand in die Hülse 3 gefüllt und fließt in Richtung der Durchtrittsöffnungen 8 zu dem nach innen stehenden ersten Radialflansch 4 an dem der Einfüllöffnung 17 fernen Ende der Hülse 3. Die zweite aushärtende Masse 28 tritt durch die Durchtrittsöffnungen 8 nach außen aus und bildet unter Auswölbung des die Hülse 3 im Bereich der Durchtrittsöffnungen 8 umschließenden Gewebeschlauchs 9 einen die Hülse 3 umschließenden Wulst 29 an der Innenseite 27 der Fassadenplatte 19. Der Gewebeschlauch 9 ist so dicht, dass die zweite aushärtende Masse 28 nicht oder nur geringfügig austritt. Nach dem Füllen des Gewebeschlauchs 9 fließt die zweite aushärtende Masse 28 um die Enden der Trennelemente 7 herum zurück zu dem nach innen und außen stehenden zweiten Radialflansch 5, wo ein Austritt der zweiten aushärtenden Masse 28 aus der Kontrollöffnung 18 ein vollständiges Verfüllen des Zwischenraums 6 zwischen der Hülse 3 und der Ankerstange 2 anzeigt.

Bei einem Aushärten verbindet sich die zweite aushärtende Masse 28 in der Hülse 3 stoffschlüssig und durch Formschluss mit einem Gewinde der Ankerstange 2 mit der Ankerstange 2. Außerdem hält die zweite aushärtende Masse 28, wenn sie ausgehärtet ist, die Hülse 3 durch Formschluss mit dem nach innen stehenden ersten Radialflansch 4 an dem der Gebäudeaußenwand 20 zugewandten Stirnende und mit dem nach innen und nach außen stehenden zweiten Radialflansch 5 an dem der Gebäudeaußenwand 20 fernen Stirnende der Hülse 3 axial auf der Ankerstange 2. Die Radialflansche 4, 5 bilden nach innen in Richtung der Ankerstange 2 abstehende Hintergriffelemente 30 der Hülse 3 für einen axialen Halt der Hülse 3 auf der Ankerstange 2 mit Hilfe der zweiten aushärtenden Masse 28. Beim Aushärten kann sich die zweite aushärtende Masse 28 auch stoffschlüssig mit der Hülse 3 verbinden. Durch Anlage an dem Gewinde der Ankerstange 2 verhindern die Radialflansche 4, 5 der Hülse 3 weitgehend einen Austritt der zweiten aushärtenden Masse 28 aus dem Zwischenraum 6 zwischen der Hülse 3 und der Ankerstange 2.

Der auf der Innenseite 27 der Fassadenplatte 19 von der durch die Durchtrittsöffnungen 9 ausgetretenen aushärtenden zweiten Masse 28 gebildete Wulst 29 auf der Innenseite 27 der Fassadenplatte 19 hält nach dem Aushärten der zweiten Masse 28 die Fassadenplatte 19 gegen ein Nähern an die Gebäudeaußenwand 20. Die Fassadenplatte 19 ist zwischen dem nach innen und nach außen stehenden zweiten Radialflansch 5 der Hülse 3 und dem von der aushärtenden beziehungsweise ausgehärteten zweiten Masse 28 gebildeten Wulst 29 in ihrem Abstand von der Gebäudeaußenwand 20 gehalten. Die Fassadenplatte 19 ist zwar zwischen dem zweiten Radialflansch 5 und dem Wulst 29 spielfrei gehalten, jedoch nicht eingespannt, so dass die Hülse 3 beziehungsweise der Fassadenhalter 1 keine mechanische Spannung in der Fassadenplatte 19 erzeugt, die die Fassadenplatte 19 im Bereich ihrer Befestigung im Durchgangsloch 21 beschädigen könnte.

Die vorstehend beschriebene und in Figur 3 gezeichnete Befestigung der Fassadenplatte 19 an und mit Abstand von der Gebäudeaußenwand 20 oder allgemein einer Mauer oder einem Befestigungsgrund bildet eine Befestigungsanordnung gemäß der Erfindung. Das beschriebene Befestigungsverfahren ist ebenfalls erfindungsgemäß.

Die Senkung 22 kann nach Herstellung der Befestigungsanordnung beispielsweise mit einer weiteren aushärtenden Masse, die in Farbe und Oberflächenstruktur der Fassadenplatte 19 ähnlich ist ausgefüllt oder mit einer Kappe oder einem Deckel verschlossen werden (nicht dargestellt). Die Senkung 22 kann auch offen bleiben.

Wird die Hülse 3 vor dem Aushärten der zweiten aushärtenden Masse 28 so auf der Ankerstange 2 gedreht, dass sich ihr zylindrischer Abschnitt 10 in einer Einbaulage vertikal oben befindet, legt sie die Fassadenplatte 19 in einer Höhe fest. Die Parallelflächen 11 der Hülse 3 ermöglichen eine Beweglichkeit der Fassadenplatte 19 radial zur Hülse 3 und zur Ankerstange 2 und quer zu den Parallelflächen 11, so dass mechanische Spannungen in der Fassadenplatte 19 durch thermische Dehnung oder Schrumpfung der Fassadenplatte 19 in Bezug auf die Gebäudeaußenwand 20 vermieden werden.

### Bezugszeichenliste

### Fassadenhalter, Befestigungsanordnung mit einem solchen Fassadenhalter und Verfahren zur Befestigung einer Fassadenplatte

1 Fassadenhalter
2 Ankerstange
3 Hülse
4 erster Radialflansch
5 zweiter Radialflansch
6 Zwischenraum
7 Trennelement
8 Durchtrittsöffnung
9 Gewebeschlauch
10 zylindrischer Abschnitt
11 Parallelfläche
12 Schrägfläche
13 ebene Fläche
14 Kante
15 Durchmesserausgleichselement
16 Querschnittsstufe
17 Einfüllöffnung
18 Kontrollöffnung
19 Fassadenplatte
20 Gebäudeaußenwand
21 Durchgangsloch
22 Senkung
23 Außenseite
24 Sackloch
25 erste aushärtende Masse
26 Halteelement
27 Innenseite
28 zweite aushärtende Masse
29 Wulst
30 Hintergriffelement

## Patentansprüche

1. Fassadenhalter zu einer Befestigung einer Fassadenplatte (19) an einer Gebäudeaußenwand (20) in einem Abstand vor der Gebäudeaußenwand (20), mit einer Ankerstange (2), die zu einer von der Gebäudeaußenwand (20) abstehenden Befestigung an der Gebäudeaußenwand (20) vorgesehen ist, und mit einer Hülse (3), die auf die Ankerstange (2) aufschiebbar ist, **dadurch gekennzeichnet, dass** wenn die Hülse (3) auf die Ankerstange (2) aufgeschoben ist, ein Zwischenraum (6) zwischen der Ankerstange (2) und der Hülse (3) besteht, dass die Hülse (3) mindestens ein nach innen in Richtung der Ankerstange (2) abstehendes Hintergriffelement (30) für einen axialen Halt der Hülse (3) mittels einer aushärtenden Masse (28) auf der Ankerstange (2) in zumindest einer Achsrichtung aufweist, und dass bei auf die Ankerstange (2) aufgeschobener Hülse (3) die aushärtende Masse (28) in den Zwischenraum (6) zwischen die Hülse (3) und die Ankerstange (2) einbringbar ist, die nach einem Aushärten der Masse (28) die Hülse (3) axialfest mit der Ankerstange (2) verbindet, wobei ein Formschluss zwischen der aushärtenden Masse (28) und dem mindestens einen Hintergriffelement (30) der Hülse (3) zumindest in der einen Achsrichtung besteht.

2. Fassadenhalter nach Anspruch 1, **dadurch gekennzeichnet, dass** die Ankerstange (2) ein Formschlusselement, insbesondere ein Gewinde, zum Verbinden mit der aushärtenden Masse (28) aufweist, mit dem die Hülse (3) nicht in Eingriff steht, insbesondere in keiner Schraubverbindung steht, sondern gegenüber dem die Hülse (3) axial auf der Ankerstange (2) verschiebbar ist.

3. Fassadenhalter nach Anspruch 1 oder 2, **dadurch gekennzeichnet, dass** die Hülse (3) radialfest auf der Ankerstange (2) ist.

4. Fassadenhalter nach einem oder mehreren der Ansprüche 1 bis 3, **dadurch gekennzeichnet, dass** die Hülse (3) eine Einfüllöffnung (17) für die aushärtende Masse (28) an einem Stirnende aufweist, die mit einem Innenraum der Hülse (3) kommuniziert.

5. Fassadenhalter nach einem oder mehreren der vorhergehenden Ansprüche, **dadurch gekennzeichnet, dass** die Hülse (3) eine Durchtrittsöffnung (8) in ihrem Umfang aufweist, die von einer der Ankerstange (2) zugewandten Innenseite der Hülse (3) zu einem Außenumfang der der Hülse (3) durchgeht, so dass die aushärtende Masse (28), die radial von innen nach außen durch die Durchtrittsöffnung (8) der Hülse (3) ausströmt, Kontakt mit der Ankerstange (2) aufweist, wobei sich die Durchtrittsöffnung (8) insbesondere in einer axialen Hälfte der Hülse (3) befindet.

6. Fassadenhalter nach einem oder mehreren der vorhergehenden Ansprüche, **dadurch gekennzeichnet, dass** die Hülse (3) innen ein Trennelement (7) aufweist, das in Längsrichtung verläuft und das bei auf der Ankerstange (2) angeordneter Hülse (3) den die Ankerstange (2) in der Hülse (3) umgebenden Zwischenraum (6) in einer Umfangsrichtung unterteilt.

7. Fassadenhalter nach Anspruch 5 und Anspruch 6, **dadurch gekennzeichnet, dass** sich die Durchtrittsöffnung (8) in einer der Einfüllöffnung (17) fernen axialen Hälfte der Hülse (3) befindet und dass sich das Trennelement (7) von dem die Einfüllöffnung (17) aufweisenden Stirnende der Hülse (3) bis zu der Durchtrittsöffnung (8) erstreckt.

8. Fassadenhalter nach einem oder mehreren der vorhergehenden Ansprüche, **dadurch gekennzeichnet, dass** die Hülse (3) Abflachungen an gegenüberliegenden Seiten ihres Außenumfangs aufweist.

9. Fassadenhalter nach einem oder mehreren der vorhergehenden Ansprüche, **dadurch gekennzeichnet, dass** die Hülse (3) an einer Umfangsstelle ein nach außen abstehendes Durchmesserausgleichselement (15) aufweist.

10. Fassadenhalter nach einem oder mehreren der vorhergehenden Ansprüche, **dadurch gekennzeichnet, dass** die Hülse (3) ein radial nach außen abstehendes Halteelement (26) und/oder einen radial nach innen stehenden Flansch (4, 5) aufweist.

11. Befestigungsanordnung mit einer in einem Abstand vor einer Gebäudeaußenwand (20) angeordneten Fassadenplatte (19) und mit einem Fassadenhalter (1) nach einem oder mehreren der vorhergehenden Ansprüche, der die Fassadenplatte (19) in dem Abstand vor der Gebäudeaußenwand (20) hält, wobei die Ankerstange (2) des Fassadenhalters (1) an der Gebäudeaußenwand (20) befestigt ist, so dass sie von der Gebäudeaußenwand (20) in Richtung der mit Abstand vor der Gebäudeaußenwand (20) angeordneten Fassadenplatte (19) absteht und bis in ein Durchgangsloch (21) der Fassadenplatte (19) reicht, wobei die Hülse (3) auf der Ankerstange (2) des Fassadenhalters (1) und in dem Durchgangsloch (21) der Fassadenplatte (19) angeordnet ist, und wobei die aushärtende Masse (28), die in fließfähigem Zustand in den Zwischenraum (6) zwischen der Ankerstange (2) und der Hülse (3) eingebracht worden ist, die Hülse (3) mit der Ankerstange (2) verbindet, **dadurch gekennzeichnet, dass** die aushärtende Masse (28) durch den Formschluss mit dem Hintergriffelement (30) der Hülse (3) die Hülse (3) axial in zumindest der einen Achsrichtung auf der Ankerstange (2) hält, ohne dass der Fassadenhalter (1) eine Kraft in axialer Richtung der Ankerstange (2) auf die Fassadenplatte (19) ausübt.

12. Verfahren zu einer Befestigung einer Fassadenplatte (19) an einer Gebäudeaußenwand (20) in einem Abstand vor der Gebäudeaußenwand (20) mit einem Fassadenhalter (19), insbesondere mit einem Fassadenhalter (19) nach einem oder mehreren der Ansprüche 1 bis 10, **dadurch gekennzeichnet, dass** die Ankerstange (2) des Fassadenhalters (1) an der Gebäudeaußenwand (20) befestigt wird, so dass sie von der Gebäudeaußenwand (20) in Richtung der mit Abstand vor der Gebäudeaußenwand (20) zu befestigenden Fassadenplatte (19) absteht und in ein Durchgangsloch (21) der Fassadenplatte (19) ragt, dass die Hülse (3) auf der Ankerstange (2) angeordnet und in das Durchgangsloch (21) der Fassadenplatte (19) eingebracht wird, und dass die aushärtende Masse (28) in fließfähigem Zustand in den Zwischenraum (6) zwischen der Ankerstange (2) und der Hülse (3) eingebracht wird und nach dem Aushärten die Hülse (3) mit der Ankerstange (2) verbindet.

13. Verfahren nach Anspruch 12, **dadurch gekennzeichnet, dass** die Fassadenplatte (19) mit Abstand vor der Gebäudeaußenwand (20) angeordnet ist, wenn sie mit dem Fassadenhalter (1) an der Gebäudeaußenwand (20) befestigt wird, und dass die Ankerstange (2) des Fassadenhalters (1) durch ein Durchgangsloch (21) in der Fassadenplatte (19) an der Gebäudeaußenwand (20) befestigt wird.

14. Verfahren nach Anspruch 12 oder 13, **dadurch gekennzeichnet, dass** die Hülse (3) so weit in das Durchgangsloch (21) in der Fassadenplatte (19) eingebracht wird, dass sie nicht auf der der Gebäudeaußenwand (20) abgewandten Außenseite (23) der Fassadenplatte (19) übersteht und/oder dass die Fassadenplatte (19) eine Senkung (22) an einer Mündung des Durchgangslochs (21) auf einer der Gebäudeaußenwand (20) abgewandten Außenseite (23) der Fassadenplatte (19) aufweist.

15. Verfahren nach einem oder mehreren der Ansprüche 12 bis 14, **dadurch gekennzeichnet, dass** die Hülse (3) so weit in das Durchgangsloch (21) in der Fassadenplatte (19) eingebracht wird, dass sie auf einer der Gebäudeaußenwand (20) zugewandten Innenseite (27) der Fassadenplatte (19) aus der Fassadenplatte (19) vorsteht und sich eine Durchtrittsöffnung (8) der Hülse (3) zumindest teilweise außerhalb des Durchgangslochs (21) der Fassadenplatte (19) auf der der Gebäudeaußenwand (20) zugewandten Innenseite (27) der Fassadenplatte (19) befindet.
